# EUROPEAN PATENT APPLICATION

(11) **EP 1 589 401 A1**
(43) Date of publication of application: **26.10.2005**
(21) Application number: 04009221.5
(22) Date of filing: 19.04.2004
(51) Int. Cl.: G06F 1/20, H01L 23/467, H05K 7/20

(54) **Air circulating structure for heat dissipation device**

(71) Applicant: Shuttle Inc., Nei-Hu Dist., Taipei (TW)
(72) Inventor: Ching-Hsi, Wu, Taipei (TW)
(74) Representative: TER MEER - STEINMEISTER & PARTNER GbR

(57) **Abstract**

An air circulating structure for a heat dissipation device includes a base (1) disposed on a heat generating device (20), a set of fins (21) mounted on the base, and a fan (4) installed at one side of the fins. The base has an opening (16) extending through at least one side thereof, and the fins are also recessed to form an opening (23), aligned with the opening in the base. The openings (16,23) of the base and the fins form the air circulating structure extending through the base through which air flow generated by the fan can be effectively guided to carry and dissipate the heat generated by peripheral electronic devices (40) of the heat generating device away from the heat fins.

## Description

### BACKGROUND OF THE INVENTION

The present invention relates in general to an air circulating guiding structure for a heat dissipating device, and more particular, to a heat dissipation device to be mounted on a central heat generating source for dissipation, which is further capable of effectively dissipating heat generated by peripheral electronic devices thereof.

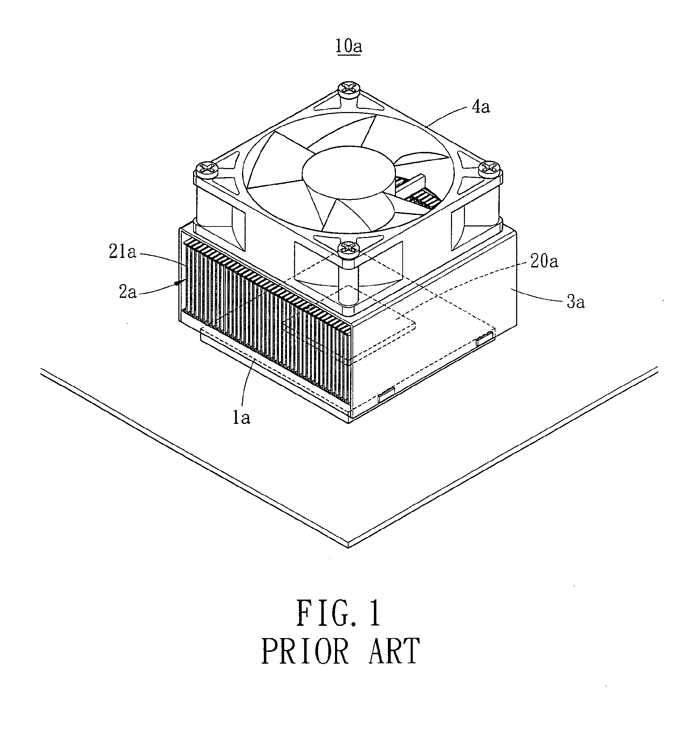

Figure 1 depicts a conventional heat dissipation device 10a mounted over a central processing unit 20a. The heat dissipation device 10a includes a thermal conductive plate 1a attached on the central processing unit 20a and a set of fins 2a extending perpendicularly from the thermal conductive plate 1a. The fins 2a are arranged in parallel and equidistant to each other. As shown, a plurality of channels is formed between neighboring fins 2a. The heat dissipation device 10a further comprises a wind mask 3a covering the top surface of the set of fins 2a and the outermost fins 2a while leaving the channels open. In operation, the heat generated by the central processing unit 20a is conducted upwardly towards the fins 2a via the thermal conductive plate 1a. The fan 4a then absorbs external air to generate wind flowing towards the fins 2a, so as to dissipate the heat conducted thereto.

In the conventional heat dissipation device 10a, the thermal conductive plate 1a is attached to the whole top surface of the central processing unit 20a. Therefore, only the heat generated by the central processing unit 20a is effectively dissipated. Because other electronic devices under the thermal conductive plate 1a are not in direct contact with the thermal conductive plate 1a, the heat generated thereby cannot be properly dissipated. As the operation speeds for these electronic devices are faster and faster, more and more heat is generated thereby. Therefore, how to instantly and effectively dissipate heat generated by peripheral electronic devices of a major heat generating device has become an important issue to be resolved.

To resolve the problems caused by the conventional heat dissipation device as described above, the Applicant, with many years of experience in this field, has developed an air circulating structure of the heat dissipation device as described as follows.

### BRIEF SUMMARY OF THE INVENTION

The present invention provides an air circulating structure for a heat dissipation device which could effectively dissipate peripheral electronic devices of a major heat generating source.

The air circulating structure for the heat dissipation device includes a base disposed on a heat generating device, a set of fins mounted on the base, and a fan installed at one side of the fins. The base has an opening extending through at least one side thereof, and the fins are also perforated to form openings aligned with the opening the base. The opening of the base and the openings of the fins form the air circulating structure through which air flow generated by the fan can be effectively guided to carry and dissipate heat generated by the heat generating device away from the heat fins. Therefore, not only the heat generated by a major heat generating source can be dissipated effectively, the heat generated by peripheral electronic devices around the major heat generating source can also be dissipated.

The present invention further provides air circulating structure of a heat dissipation device, comprising a base, a first set and a second set of fins, a first fan and a second fan. The base is mounted on a heat dissipation device on a printed circuit board. The first set of fins includes a plurality of first fins extending vertically from a top surface of the base. The second set of fins has a plurality of second fins extending horizontally with respect to the first fins. The first fan is mounted to the base, and the second fan mounted to the printed circuit board The first and second fans are mounted at respective lateral sides of the first and second sets of fans distal to each other, and the first and second fans are rotated to circulate air along the same direction.

The base comprises a first opening extending therethrough, and the first set of fins comprises a second opening aligned over the first opening. The first and second openings are aligned over at least one peripheral electronic device of the heat generating device on the printed circuit board. The first set of fins comprises a U-shape heat pipe having a first free end extending through the first fins and a second free end. The base includes a recessed slot to receive the second free end of the U-shape heat pipe therein. The second set of fins comprises at least one L-shape heat pipe having a vertical end extending through the second fins and a horizontal end. The structure of further comprises a thermal conductive plate attached to a bottom surface of the base. The horizontal end of the L-shape heat pipe extends laterally through the thermal conductive plate.

These and other objectives of the present invention will become obvious to those of ordinary skill in the art after reading the following detailed description of preferred embodiments.

It is to be understood that both the foregoing general description and the following detailed description are exemplary, and are intended to provide further explanation of the invention as claimed.

### BRIEF DESCRIPTION OF THE DRAWINGS

These as well as other features of the present invention will become more apparent upon reference to the drawings therein:
Figure 1 illustrates a perspective view of a conventional heat dissipation device;
Figure 2 is an exploded view of a portion of a heat dissipation device according to the present invention;
Figure 3 is a perspective view of the heat dissipation device before a fan is assembled therewith;

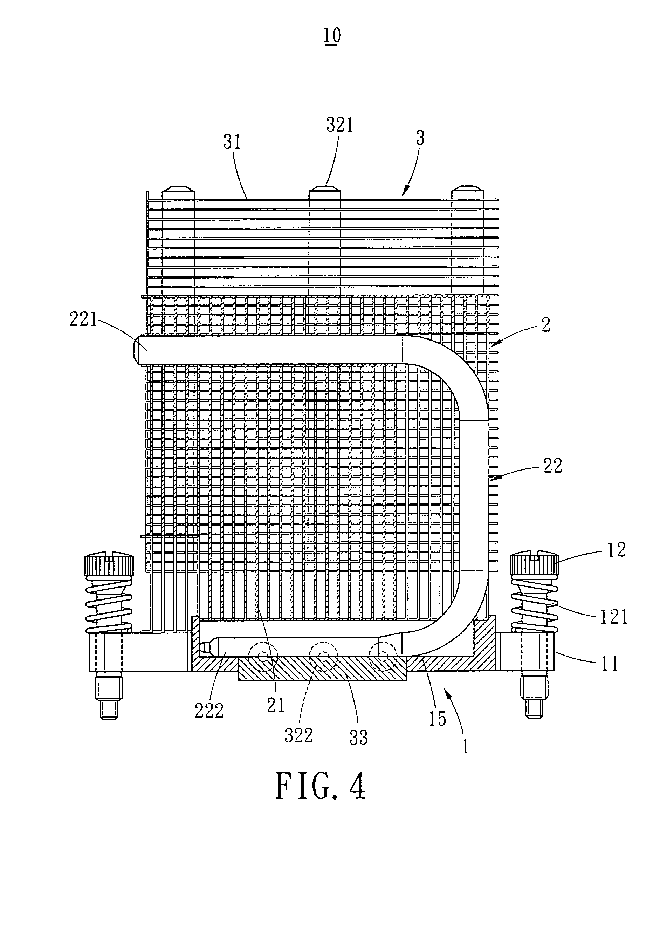

Figure 4 is a cross sectional view of the heat dissipation device;
Figure 5 is a perspective view showing the heat dissipation device to be installed on a printed circuit board;
Figure 6 is a perspective view showing the heat dissipation device installed on the printed circuit board; and
Figure 7 is a cross sectional view of the heat dissipation device.

### DETAILED DESCRIPTION OF THE INVENTION

Reference will now be made in detail to the preferred embodiments of the present invention, examples of which are illustrated in the accompanying drawings. Wherever possible, the same reference numbers are used in the drawings and the description to refer to the same or like parts.

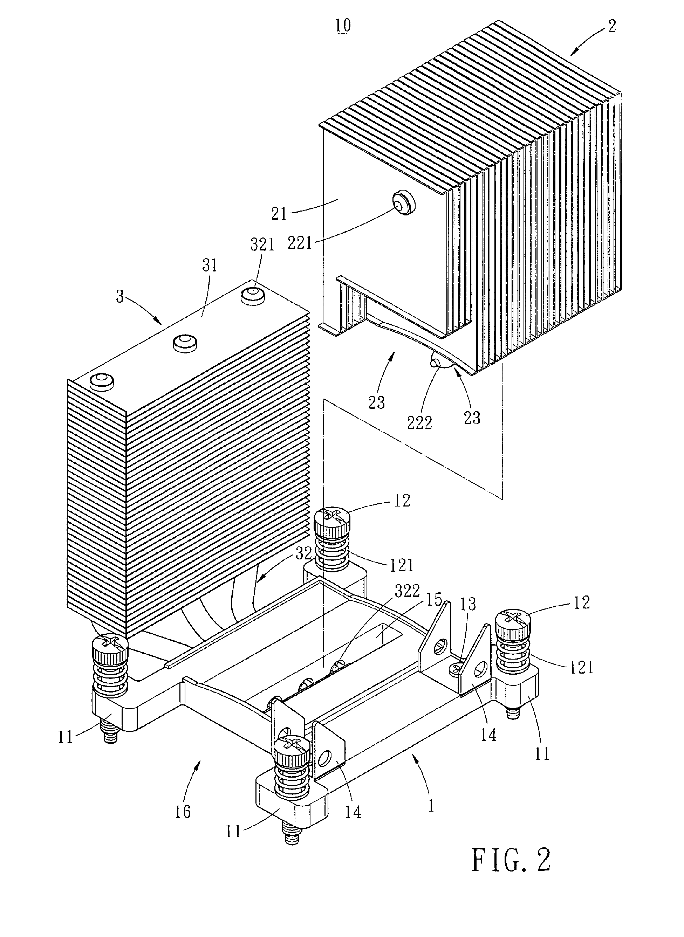

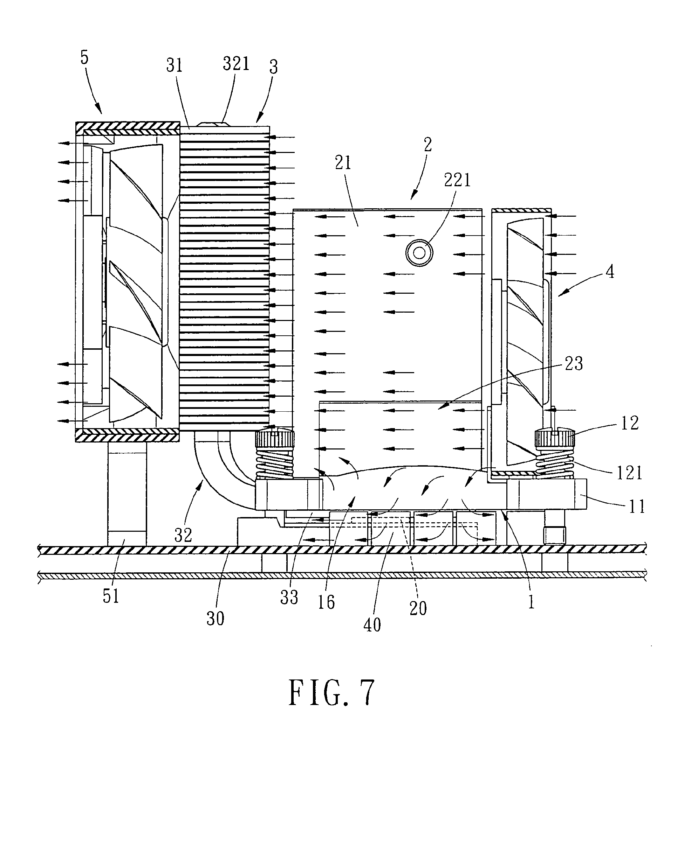

Referring to Figure 2, a heat dissipation device 10 is used to dissipating heat generated by a central processing unit 20 (as shown in Figure 7). Two sets of fins 2 and 3 are formed in the heat dissipation device 10.

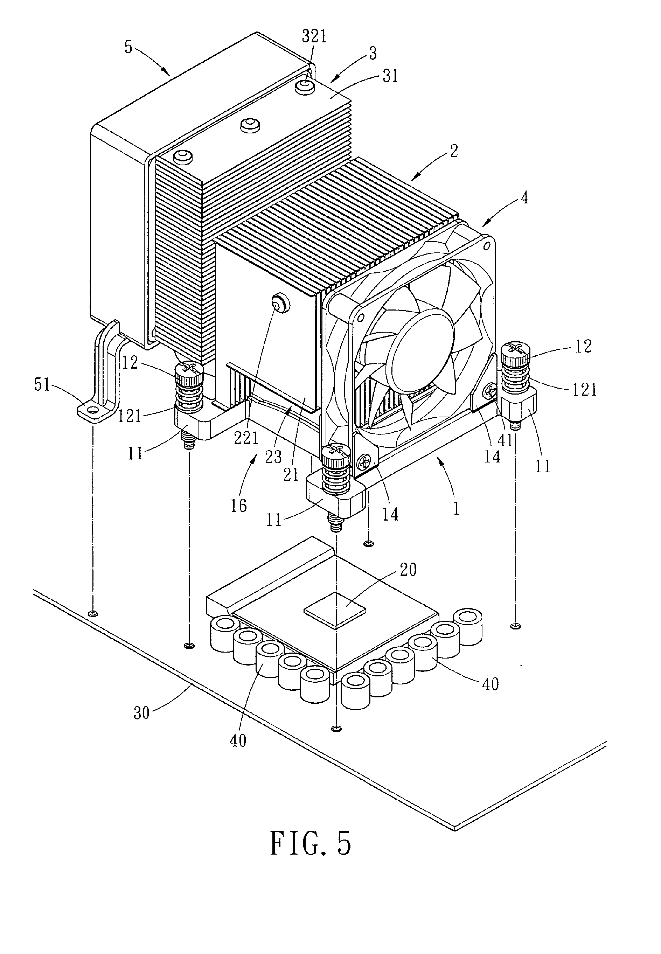

The heat dissipation device 10 further includes a base 1 to be attached to a top surface of the central processing unit 20. Although the base 1 can be configured into various shapes according to the top surface of the central processing unit 20, area of the printed circuit board to be covered thereby, or other specific parameters, in this embodiment, the base 1 has a substantially rectangular shape. Four corners of the base 1 protrude outwardly to form connection parts 11. Each connection part 11 is perforated with a hole, such that the base 1 can be attached to a printed circuit board 30 (as shown in Figure 5) by four bolts 12. In Figure 2, each screw member 12 is equipped with a spring 121 to adjust the height of the base 1 with respect to the printed circuit board 30 and to level the base 1. A pair of holders 14 is fastened with the base 1 by a pair of screws. The holders 14 are located at first pair of opposing ends of one side of the base 1.

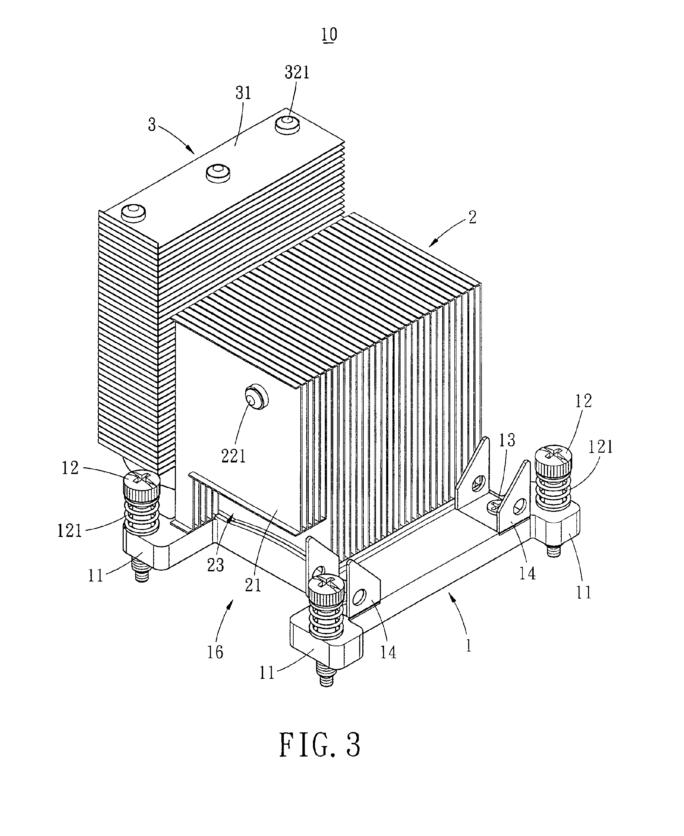

Referring to Figures 2 and 3, a first set of fins 2 and a second set of fins 3 are attached to the base 1. The first set of fins 2 are mounted on the base 1 adjacent to the holders 14. The first set of fins 2 includes a plurality of fins 21 in parallel with each other by a constant distance. As shown, the fins 21 extend between the first pair of opposing ends of the base 1, such that a plurality of channels is formed to extend along a second pair of opposing ends of the base. The first set of fins 2 includes a U-shape heat pipe 22 having a first free end 221 and a second free end 222 parallel to the first free end 221. The first free end 221 extends through the fins 21 and the second free end extends underneath the fins 21. The heat pipe 22 comprises a wick structure and a working fluid therein to achieve heat dissipation. Preferably, the base 1 includes a recessed slot 15 for receiving the second free end under the fins 21 therein.

The second set of fins 3 also comprises a plurality of fins 31 extending perpendicularly to the extension of the first fins 21. The first set of fins 3 comprises a plurality of L-shape heat pipes 32 (as shown in Figure 7). Each of the heat pipes 32 includes a vertical end 321 and a horizontal end 322. Wick structures and working fluid are installed in the heat pipes 32 to perform heat dissipation. A thermal conductive plate 33 is attached to a bottom surface of the base 1, and the horizontal ends 322 of the heat pipes 32 extend through the thermal conductive plate 33. Thereby, the second set of fins 3 is connected to the base 1 with the fins 31 suspending next to the first set of fins 2.

In this embodiment, one of the first pair of opposing sides is recessed towards the center of the base 1. That is, an opening 16 is formed at one of the first pair of the opposing sides. In application, the opening 16 is aligned over peripheral electronic devices 4 of the central processing unit 20 (as shown in Figure 5). In correspondence with the opening 16, the fins 21 over the opening 16 are also recessed to form an opening 23.

As shown in Figure 5, a first fan 4 and a second fan 5 are attached at the sides of the first and second sets of fins 2 and 3 distal to each other. Screw members 41 are used to lock the first fan 4 between the holders 14. The second fan 5 includes a pair of lugs 51 extending from two bottom corners thereof, such that the second fan 5 can be mounted to the printed circuit board 30 using a pair of latching screws extending through the lugs 51 and the printed circuit board 30. The rotation orientations of the first and second fans 4 and 5 are the same. That is, when the first fan 4 circulates external air into the first set of fins 2, the second fan dissipate air within the first and second sets of fins 2 and 3 to the ambient.

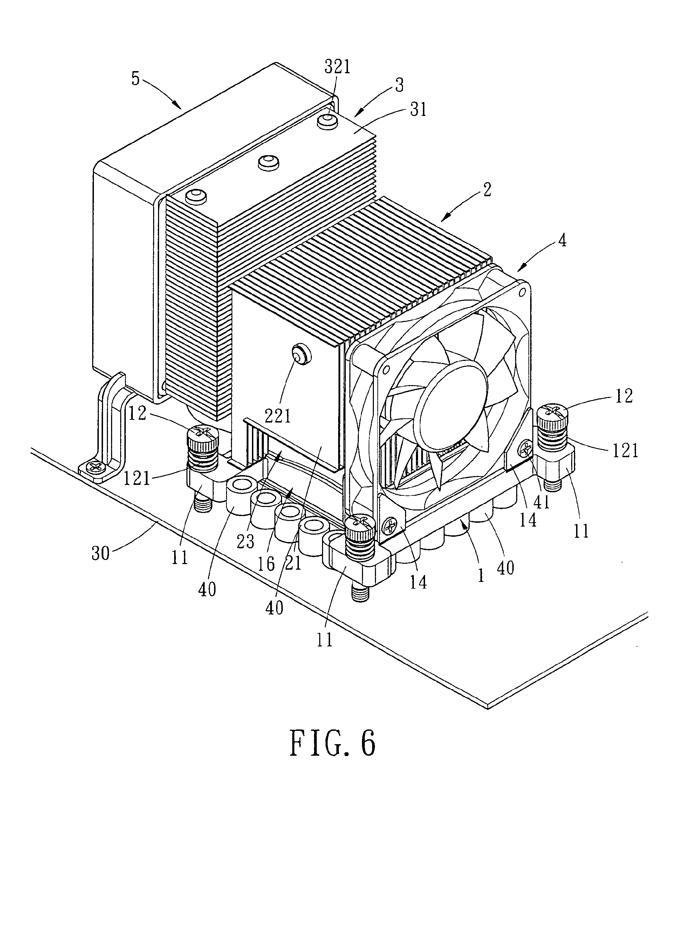

Referring to Figures 3 and 6, to assemble the heat dissipation device 10, the first set of fins 2 is mounted on the base 1 with the second free end 222 of the heat pipe 22 disposed within the recessed slot 15 of the base 1. The second set of fin 3 is attached to the base 1 by inserting horizontal ends 322 of the heat pipes 32 through the thermal conductive plate 33 attached to the bottom surface of the base 1. Thereby, the second set of fins 3 is suspended at one side of the base 1.

The first fan 4 is then locked within the holders 14, and the second fan 5 is mounted to the printed circuit board 30, such that the first and second fans 4 and 5 are attached at the respective distal sides of the first and second sets of fins 2 and 3. Before the second fan 5 is locked with the printed circuit board 30, the base 1 is attached on the top surface of the central processing unit 20 with the openings 16 and 23 aligned over peripheral electronic devices 40 of the central processing unit 20.

As shown in Figure 7, in operation, the blades of the first fan 4 are rotate towards a direction to circulate ambient air into the first and second sets of fins 2 and 3. Thereby, the lower-temperature ambient air cools down the fins 21 and 31 and the heat pipes 22 and 32. Meanwhile, the blades of the second fan 5 rotate toward a direction to exhaust air from the first and second sets of fins 2 and 3 towards the ambient, such that heat will not be accumulated in the first and second sets of fins 2 and 3.

As the peripheral electronic devices 40 are located under the openings 16 and 23, heat generated by the peripheral electronic devices 40 will be conducted towards the first set of fins 2 directly. When the ambient is circulated into the first set of fins 2, the heat absorbed thereby can be efficiently dissipated via the second set of fins 2.

By the structure as disclosed above, heat generated by the central processing unit 20 and the electronic devices 40 can be effectively absorbed and dissipated. The combination of the first and second fans 4 and 5 allows air circulated more efficiently, so as to enhance the heat dissipation effect. The combination of the first and second fans 4 and 5 also provide heat dissipation effect upon the heat pipes 22 and 32, such that the operation power of the heat pipes 22 and 32 is lowered, and the lifetime thereof is prolonged. Further, as the heat pipes 22 and 32 are embedded within each set of the fins 2 and 3, the overall volume of the heat dissipation device 10 is reduced.

While an illustrative and presently preferred embodiment of the invention has been described in detail herein, it is to be understood that the inventive concepts may be otherwise variously embodied and employed and that the appended claims are intended to be construed to include such variations except insofar as limited by the prior art.

## Claims

1. A air circulating structure of a heat dissipation device, comprising:
a base to be mounted on a major heat generating device, wherein one side of the base is recessed to form a first opening extending therethrough;
a set of fins extending perpendicularly from a top surface of the base, the fins being spaced with each other to form a plurality of air circulating channels, wherein the fins disposed over the first opening are recessed to form a second opening over the first opening; and
a fan, attached to one lateral side of each of the fins.

2. The structure of Claim 1, wherein the major heat generating device includes a central processing unit

3. The structure of Claim 2, wherein the first and second openings are aligned over at least one peripheral heat generating device of the major heat dissipation device.

4. The structure of Claim 1, wherein the base comprises a pair of holders formed at one side thereof for locking the fan therein.

5. The structure of Claim 4, wherein the set of fins is adjacent to the holders.

6. The structure of Claim 1, wherein the set of fin further comprises a U-shape heat pipe having a first free end extending through the fins and a second free end extending underneath the fins.

7. The structure of Claim 6, wherein the base further comprises a recessed slot for receiving the second free end of the U-shape heat pipe therein.

8. Air circulating structure for a heat dissipation device, comprising:
a base to be mounted on a heat dissipation device on a printed circuit board;
a first set of fins having a plurality of first fins extending vertically from a top surface of the base;
a second set of fins having a plurality of second fins extending horizontally with respect to the first fins;
a first fan mounted to the base; and
a second fan mounted to the printed circuit board;
wherein the first and second fans are mounted at respective lateral sides of the first and second sets of fans distal to each other, and the first and second fans are rotated to circulate air along the same direction.

9. The structure of Claim 8, wherein the base further comprises a first opening extending therethrough.

10. The structure of Claim 9, wherein the first set of fins comprises a second opening aligned over the first opening.

11. The structure of Claim 10, wherein the first and second openings are aligned over at least one peripheral electronic device of the heat generating device on the printed circuit board.

12. The structure of Claim 8, wherein the first set of fins comprises a U-shape heat pipe having a first free end extending through the first fins and a second free end.

13. The structure of Claim 12, wherein the base includes a recessed slot to receive the second free end of the U-shape heat pipe therein.

14. The structure of Claim 8, wherein the second set of fins comprises at least one L-shape heat pipe having a vertical end extending through the second fins and a horizontal end.

15. The structure of Claim 14, further comprising a thermal conductive plate attached to a bottom surface of the base.

16. The structure of Claim 15, wherein the horizontal end of the L-shape heat pipe extends laterally through the thermal conductive plate.
